# EUROPEAN PATENT SPECIFICATION

(11) **EP 1 058 871 B1**
(45) Date of publication and mention of the grant of the patent: **05.11.2008**
(21) Application number: 97952669.6
(22) Date of filing: 29.12.1997
(51) Int. Cl.: G05F 3/02, H02H 3/24, H02H 3/20

(54) **DC POWER BUS VOLTAGE TRANSIENT SUPPRESSION CIRCUIT**
ÜBERSPANNUNGSUNTERDRÜCKUNGSSCHALTUNG FÜR GLEICHSTROMSAMMELSCHIENE
CIRCUIT DE SUPPRESSION DE SURTENSION TRANSITOIRE DANS UN BUS D'ALIMENTATION C.C.

(43) Date of publication of application: 13.12.2000
(73) Proprietor: Intel Corporation, Santa Clara, CA 95052-8119 (US)
(72) Inventor: MASSIE, Harold, L., West Linn, OR 97068 (US)
(74) Representative: Wombwell, Francis
(86) International application number: PCT/US1997/024026
(87) International publication number: WO 1999/034270

(56) References cited:
- US-A- 3 596 196
- US-A- 4 849 845
- US-A- 5 311 391
- US-A- 5 450 267
- US-A- 5 463 520
- US-A- 5 661 625
- US-A- 5 666 045

## Description

### BACKGROUND OF THE INVENTION

The present invention relates to power buses in general and more particularly to the method and apparatus for suppressing transients on a DC power bus.

Current steps in the load current drawn from a DC voltage bus which is coupled to a power supply result in voltage transients. Power supplies include voltage regulators to account for current changes, but, if the current changes are very fast, as they can be in buses used in computer systems, for example, the bus voltage may go out of the required voltage range before the power supply can compensate for the current changes. In other words, power supplies do not generally respond quickly to load changes.

In the past, there has been an attempt to solve this problem through the use of a large value of capacitance across the power bus to suppress these voltage transients as shown in US 3 596 196. However, a capacitor with a large value of capacitance also has a large size and takes up a considerable amount of printed circuit board space. Furthermore, the reliability of these large capacitors is low resulting in a lower reliability for the overall system.

### SUMMARY OF THE INVENTION

A transient suppression circuit is coupled to suppress transients on a dc power bus which carries a first voltage having a nominal value. A threshold circuit is coupled to the bus and provides an output when the first voltage deviates from the nominal value by more than a predetermined amount. A source of current, which in the illustrated embodiment includes a capacitor charged to a higher voltage than that on the bus is provided. A switch having a control input coupled to the output of the threshold circuit couples the source of current to the bus in response to the output of the threshold circuit.

### BRIEF DESCRIPTION OF THE DRAWINGS

FIG. 1 is a block diagram of an embodiment of a system including a power supply supplying power to a load over a dc bus which also includes an embodiment of a transient suppression circuit according to the present invention.
FIG. 2 is a block-circuit diagram of the embodiment of FIG. 1 showing in more detail an embodiment of a dc power bus voltage transient suppression circuit according to the present invention.
FIG. 3 illustrates an alternate embodiment of a portion of FIG. 2.

### DETAILED DESCRIPTION

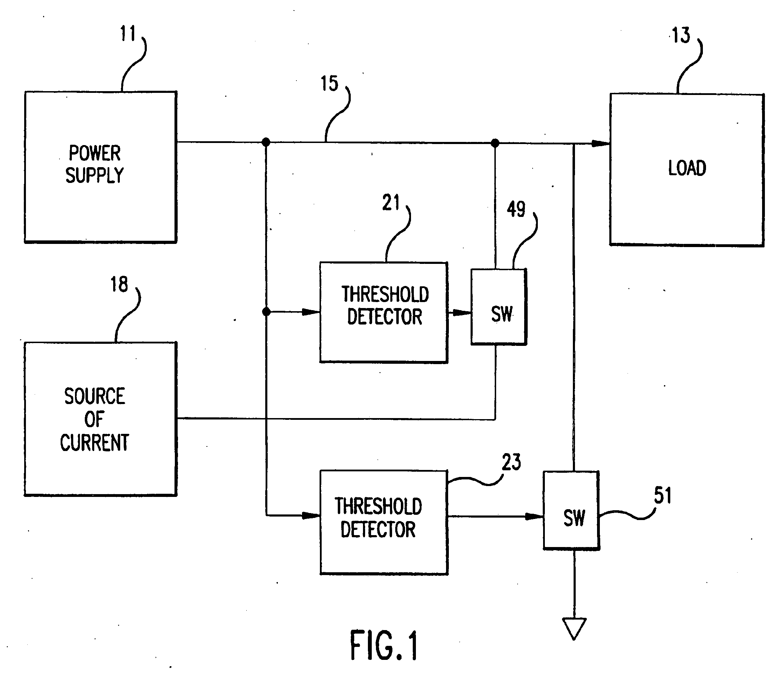

A block diagram of an embodiment of a system which includes an embodiment of an active transient suppression circuit according to the present invention is shown in FIG. 1. In this embodiment, power is supplied from a power supply 11 to a load 13. As will be discussed below, the load may be a computer system. Although embodiments of the invention used in computer systems are particularly useful, embodiments of circuits according to the present invention can also be used in other application where the nature of the load is such that current changes occur which are very fast.

The connection between the power supply and the load 13 is a voltage bus 15 carrying a first voltage designated as Vout. Vout has a nominal value referenced to ground for example. As used herein, ground does not necessarily imply earth potential; it is the reference potential for Vout. The voltage Vout may be anyone of a number of different values such as a +5 volt, +3.3 volt or +12 volt, values typically used in computer systems. Of course, it may be any other voltage and will depend on the particular application.

Coupled to the Vout bus 15 is a first threshold detector 21 which has a threshold which is negative or below the nominal value of Vout by a first predetermined value. Also coupled to the bus is a second threshold detector 23 which has a threshold which is positive or above the nominal voltage value by a second predetermined value. Although positive and negative threshold detectors are shown, embodiments of the present invention with only one threshold detector are possible, particularly embodiments with only a negative threshold detector. Each threshold detector provides an output when the first voltage Vout deviates from the nominal value by its associated first or second predetermined amount, respectively.

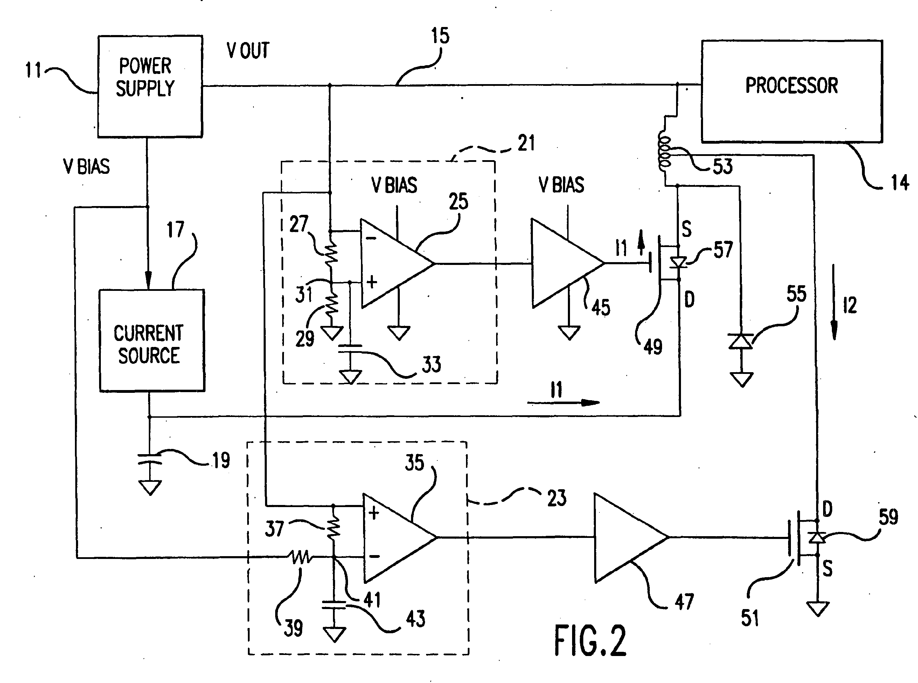

A source of current 18 is coupled to the bus 15 through a switch 49 which is controlled by the output of the first threshold detector 21. Thus, when the voltage Vout drops below the threshold of threshold detector 21, due to an increase in load, additional current is supplied through the switch. As will be described below, in the embodiment illustrated in Fig. 2, this current is obtained from a capacitor charged to a voltage higher than the nominal value of Vout. Similarly, a switch 51, controlled by the second threshold detector 23, couples the bus 15 to ground when the threshold of the second threshold detector 23 is exceeded, to sink excess current to ground.

FIG. 2 shows a more detailed circuit diagram of an embodiment of the present invention. In the embodiment illustrated in FIG. 2, the load is a processor 14. Processor 14 may include conventional components such as a processor, memory, I/O circuits etc. Particularly in the case of modern high speed processors such as those currently made by Intel Corporation, fast changes in the current required by processor 14 may occur.

In addition to supplying the output Vout, power supply 11 also supplies a bias voltage Vbias to a current source 17. The voltage Vbias is a higher voltage than the voltage Vout. Current source 17 charges a capacitor 19 to the voltage level of Vbias. This arrangement provides the source of current to be used in responding to an increased load on the bus 15. The current supplied by current source 17 is set to a value that does not overload the voltage Vbias, yet provides the average current required to suppress voltage transients on Vout bus 15.

First threshold detector 21 includes a comparator 25 with non-inverting and inverting inputs, which has the Vbias voltage and ground as its operating voltage. Comparator 25 has its inverting input coupled to Vout. The voltage Vout is also coupled through a voltage divider made up of resistors 27 and 29. The junction 31 of these two resistors is coupled to the input to the non-inverting terminal of comparator 25. This terminal is also coupled to ground through a capacitor 33. In the case of the positive threshold detector 23, the non-inverting input of a comparator 35 is coupled to voltage bus 15 and the Vout voltage is also coupled to a voltage divider made up of resistors 37 and 39 with a junction 41 therebetween. Resistor 39 has its other terminal coupled to Vbias. A capacitor 43 couples the junction 41 to ground. Junction 41 is coupled to the inverting input of comparator 35. Although not shown, comparator 35 is also coupled across the voltage Vbias and ground to provide its operating voltage.

The output of comparator 25 is coupled to a FET driver 45 and the output of the comparator 35 to a FET driver 47. Each of these FET drivers is also coupled between Vbias and ground as its operating voltage. The output of FET driver 45 is coupled to a FET switch 49 and the output of FET driver 47 to a FET switch 51. FET switch 49 has its source coupled to the capacitor 19 and its drain coupled to an inductor 53, the other side of which is coupled to the voltage bus 15. The terminal of the inductor 53 to which the drain of FET switch 49 is coupled is also coupled to the cathode of a diode 55, the anode of which is coupled to ground. FET switch 51 has its source coupled to ground and its drain coupled to a center tap of inductor 53. FET switch 49 has an internal diode 57 between its source and drain and FET switch 51 includes an internal diode 59 between its source and drain.

In operation, threshold detector 21 monitors power bus 15 for transients resulting in a voltage drop greater than a predetermined amount, e.g., -2% as compared to the average value of Vout. The monitoring is done by using the voltage divider made up of resistors 27 and 29 and capacitor 33. The values of the resistors are selected such that the voltage at junction 31, when Vout is at its full value, is 2% below Vout. This voltage value is temporarily stored in capacitor 33 which will retain that value when a transient occurs. If a transient results in the voltage Vout dropping below the 2% level, for example, the inverting input will drop below the non-inverting input and the output of comparator 25 goes high. In response to this, FET driver 45 provides a fast rise time, voltage gate to FET switch 49 which is an N-channel FET. FET switch 49 turns on connecting the voltage stored in capacitor 19 to one end of inductor 53. Inductor 53 limits the rise time of the current 11, flowing between capacitor 19 and voltage bus 15 through inductor 53, to a safe value. The value of 11 increases rapidly until it is equal to the load current transient on Vout. Through the use of the illustrated embodiment, the transient voltage Vout is clamped to a value of -2%, for example. When the power supply recovers from the transient and provides the new required current, Vout recovers and the output of comparator 25 goes low shutting off FET switch 49. Diode 55 suppresses the voltage spike on the drain of FET switch 49 due to the current changing in the inductor 53 when FET switch 49 turns off. The internal diode 57 of FET 49 may be sufficient to suppress this voltage.

While FET 49 switch is on, the inductor current 11 discharges capacitor 19. Since the voltage on capacitor 19 is much higher than Vout, e.g., 8-9 volts higher, capacitor 19 can be allowed to discharge several volts while FET 49 is on. This is in contrast to the situation where a capacitor is coupled to the Vout bus, as occurred in the prior art. In that case the discharge would have to be limited to 0.100 v. or less. Because, with the illustrated embodiment, it is possible to discharge several volts, the capacitance value of capacitor 19 can be much less than would be required if a capacitor were coupled directly to the Vout bus.

The embodiment of the present invention illustrated in FIG. 2 also includes the positive threshold detector 23 which monitors Vout bus 15 for Vout transients which cause the voltage to increase by a predetermined percentage, e.g., a percentage greater than 2%, as compared to the average or nominal value of Vout. In this case, the voltage Vout is coupled to the non-inverting input of comparator 35. Resistors 37 and 39 coupled in series between Vout and Vbias set a voltage which is coupled to the inverting terminal of the comparator 45 which is, for example, 2% above the nominal value of Vout. The capacitor 43 stores this value and maintains it during a transient. If the voltage Vout exceeds the preset difference, for example, 2%, the output voltage from comparator 35 drives FET driver 47 which turns on FET switch 51 during the transient. With FET switch 51 turned on, the current I2 in the path between Vout bus 15 and ground, which is conducted through a portion of inductor 53 and FET switch 51, increases until it is equal to the decrease in a load current in Vout. This current sinking limits the voltage overshoot of Vout to the predetermined value of, e.g., +2%. Coupling the current I2 through a portion of inductor 53 using the tap on inductor 53 limits the rise time of the current I2.

Thus, in each of the threshold detectors, one resistor of a voltage divider, i.e., resistor 27 or 37 is coupled to the bus, and the other, i.e., resistor 29 or 39 to a reference potential, ground in the case of resistor 29 and Vbias in the case of resistor 39.

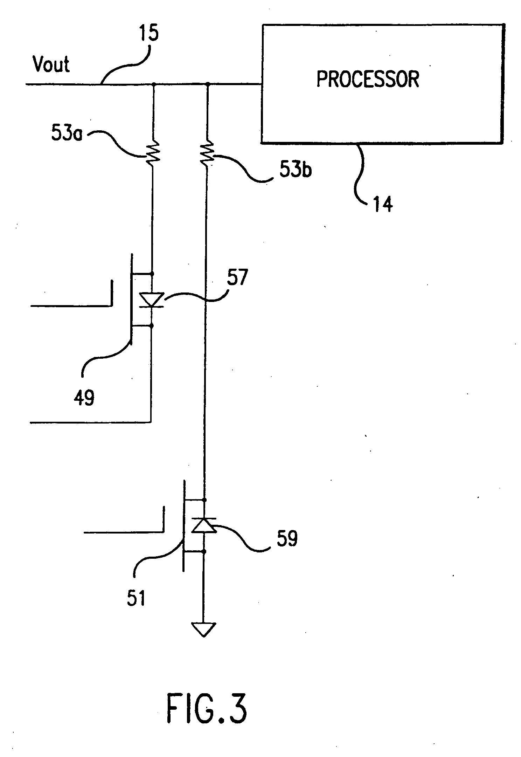

In the embodiment of Fig. 2, FETs 49 and 51 are coupled to the Vout bus by inductor 53. In an alternative embodiment shown in Fig.3, inductor 53 is replaced by two resistors 53a and 53b and diode 55 is eliminated. Although this arrangement is more lossy, it can be implemented at a lower cost. Furthermore, in the illustrated embodiments, specific threshold detectors are illustrated. Other embodiments of threshold detectors could be used in place of these. In addition, although specific types of FET switches are shown, other types of switches for switching capacitor 19 to voltage bus 15 in response to a threshold detector output from threshold detector 21 or switching the bus 15 to ground in response to an output from threshold detector 23 may also be used. These and other modifications can be made without departing from the spirit of the invention which is intended to be limited solely by the appended claims.

## Claims

1. A system comprising a bus carrying a first voltage having a nominal value and a circuit to suppress transients on said bus comprising:
a first threshold circuit (21) to provide a first signal at an output when said first voltage deviates from said nominal value by more than a first predetermined amount; **characterized in that** it further comprises
a source of current (17) comprising a capacitor (19) storing a second voltage (VBIAS) having a value greater than said nominal voltage of said first voltage; and
a first switch (49) coupling said capacitor (19) to said bus (15), said switch having a control input coupled to the output of said first threshold circuit.

2. A system according to claim 1 wherein said source of current (17) further includes a current source coupled to receive said second voltage (VBIAS) as an input and providing a current output, said capacitor (19) coupled to said current output.

3. A system according to claim 2 wherein said first predetermined amount is an amount below said nominal value and further including:
a. a second threshold circuit (23) providing an output when said first voltage deviates from its nominal value by more than a second predetermined amount above said nominal value; and
b. a second switch (51) coupling said bus to ground, said switch having a control input coupled to the output of said second threshold circuit.

4. A system according to claim 3 and further including an inductor (53) coupled between said first switch (49) and said bus, said inductor having a center tap, said second switch (51) coupling said center tap to ground.

5. A system according to claim 4 and further including a diode (55) between said inductor (53) and ground, said diode (55) having its cathode coupled to said inductor (53).

6. A system according to claim 3 and further including a first resistor (53a) coupled between said first switch (49) and said bus (15), and a second resistor (53b) coupled between said second switch (51) and said bus (15).

7. A system according to claim 3 wherein said first (21) and second (23) threshold circuits each comprise:
a. a comparator (25, 35), with non-inverting and inverting inputs, having one of said inputs coupled to said bus (15),
b. a voltage divider comprising third (27, 37) and fourth (29, 39) resistors in series having a junction (31, 41) therebetween, said junction coupled to the other input of said comparator, the third resistor (27, 37) of said voltage divider coupled to said bus (15) and the fourth resistor (29, 39) of said voltage divider coupled to a reference potential; and
c. an averaging capacitor (33, 43) coupling said other comparator input to ground.

8. A system according to claim 7 wherein said fourth resistor (29) of the voltage divider of said first threshold circuit (21) is coupled to ground and said fourth (39) resistor of said second threshold circuit (23) is coupled to said second voltage (VBIAS).

9. A system according to claim 8 wherein said first (49) and second (51) switches comprise FET switches.

10. A system according to claim 1 wherein said first threshold circuit comprises:
a. a comparator (25) with non-inverting and inverting inputs, having one of said inputs coupled to said bus (15).
b. a voltage divider comprising third (27) and fourth (29) resistors in series having a junction (31) therebetween, said junction coupled to the other input of said comparator, said third (27) resistor coupled to said bus (15) and said fourth resistor (29) coupled to a reference potential; and
c. an averaging capacitor coupling (33) said other comparator input to ground.

11. A system according to claim 10 wherein said fourth resistor (29) of the voltage divider of said first threshold circuit (21) is coupled to ground.

12. A system according to claim 10 wherein said first switch (49) comprises a FET switch having gate forming its control input.

13. A system according to claim 12 and further including a FET driver (45) coupling the output of said first threshold circuit to said gate.

14. A computer system comprising:
a load (14);
a power supply (11) supplying a first voltage having a normal nominal value coupled to said load; and
a dc power bus (15) extending between said power supply and said load, said bus (15) carrying said first voltage; and
a transient suppression circuit for suppressing transients on said bus, comprising a first threshold circuit (21) to provide a first signal at an output when said first voltage deviates from said nominal value by more than a first predetermined amount;
a source of current (17) comprising a capacitor (19) storing a second voltage having a value greater than said nominal value of said first voltage; and
a first switch (49) coupling said capacitor (19) to said bus (15), said switch having a control input coupled to the output of said first threshold circuit (21).

15. A computer system according to claim 14 wherein the power supply also has a second output supplying said second voltage (VBIAS) and said source of current (17) further includes a current source coupled to receive said second voltage as an input and providing a current output, said capacitor (19) coupled to said current output of said current source.

16. A computer system according to claim 15 wherein said first predetermined amount is an amount below said nominal value wherein said transient suppression circuit further comprises:
a. a second threshold circuit (23) providing an output when said first voltage deviates from its nominal value by more than a second predetermined amount greater than said nominal value; and
b. a second switch (51) coupling said bus (15) to ground, said switch having a control input coupled to the output of said second threshold circuit (23)

17. A computer system according to claim 16 wherein said first (21) and second (23) threshold circuits each comprise:
a. a comparator (25, 35) with non-inverting and inverting inputs, having one of said inputs coupled to said bus;
b. a voltage divider comprising first (27, 37) and second (29, 39) resistors in series having a junction (31, 41) therebetween, said junction coupled to the other input of said comparator (25, 35), said first resistor (27, 37) coupled to said bus (15) and said second resistor (29, 39) coupled to a reference potential; and
c. an averaging capacitor (33, 43) coupling said other comparator input to ground.

18. A computer system according to claim 17 wherein said second resistor (29) of the voltage divider of said first threshold circuit (21) is coupled to ground and said second resistor (39) of said second threshold circuit (23) is coupled to said second voltage (VBIAS).

19. A computer system according to claim 17 wherein said first (49) and second (51) switches comprise FET switches each having a gate forming its control input.

20. A computer system according to claim 19 and further including first (45) and second (47) FET drivers coupling the outputs of said first (21) and second (23) threshold circuits to said gates of said first (49) and second (51) switches.

21. A method of suppressing transients on a dc power bus (15) extending between a power supply (11) and a load (14) said bus (15) carrying a first voltage having a nominal value comprising:
a. charging a capacitor (19) to a second voltage higher than said first voltage;
b. detecting when said first voltage deviates from its nominal value by more than a first predetermined amount; and
c. coupling said capacitor (19) to said bus (15) in response to detecting said first threshold.

22. A method according to claim 21, wherein said predetermined amount is an amount below said nominal value and further including:
a. detecting when said first voltage is greater than a second predetermined amount above said nominal value of said first voltage; and
b. coupling said bus (15) ground in response to detecting said second threshold.

23. A method according to claim 22, and further including limiting the rate of change of current flowing between said capacitor (19) and said bus (15) and between said bus and ground.

24. A method according to claim 23 and further including suppressing a voltage resulting from a change in the current flowing from said capacitor (19) to said bus (15).

25. A method according to claim 24 wherein said steps of detecting when said first voltage deviates from its nominal value more than a first and a second amount each comprise;
a. deriving a reference voltage value from the nominal voltage on said bus (15) and storing said voltage
b. comparing the voltage on said bus (15) with said reference value;
c. generating an output, to cause coupling of said bus (15) to said capacitor (19) and ground respectively, when the voltage on said bus deviates beyond said reference value.

26. A method according to claim 25 wherein said reference voltage is a value less than said nominal value of said first voltage and an output causing coupling of said bus (15) to said capacitor (19) is generated when the voltage on said bus drops below said reference voltage value.

27. A method according to claim 26 wherein said reference voltage is a value greater than said nominal value of said first voltage and an output causing coupling of said bus (15) to ground is generated when the voltage on said bus drops below said reference voltage value.

## Patentansprüche

1. Ein System mit einem Bus, welcher eine erste Spannung mit einem nominellen Wert führt und mit einer Schaltung zur Unterdrückung von Transienten auf dem Bus, aufweisend:
eine erste Schwellwert-Schaltung (21) zur Bereitstellung eines ersten Signals an einem Ausgang, wenn die erste Spannung von dem nominellen Wert um mehr als einen ersten vorgegebenen Wert abweicht;
**dadurch gekennzeichnet, dass** es ferner aufweist:
eine Stromquelle (17), die einen Kondensator (19) aufweist, der eine zweite Spannung (VBIAS) speichert, die einen größeren Wert hat als die nominelle Spannung der ersten Spannung; und
einen ersten Schalter (49), welcher den Kondensator (19) mit dem Bus (15) koppelt, wobei der Schalter einen Steuereingang aufweist, der mit dem Ausgang der ersten Schwellwert-Schaltung gekoppelt ist.

2. Ein System nach Anspruch 1, wobei die Stromquelle (17) ferner eine Stromquelle aufweist, die zum Empfangen der zweiten Spannung (VBIAS) als Eingabe gekoppelt ist, und eine Stromausgabe bereitstellt, wobei der Kondensator (19) mit dem Stromausgang gekoppelt ist.

3. Ein System nach Anspruch 2, wobei der erste vorgegebene Wert ein Wert unterhalb des nominellen Wertes ist und ferner aufweisend:
a. eine zweite Schwellschwertschaltung (23), die eine Ausgabe bereitstellt, wenn die erste Spannung von ihrem nominellen Wert und mehr als einen zweiten vorgegebenen Wert oberhalb des nominellen Wertes abweicht; und
b. einen zweiten Schalter (51), welcher den Bus mit Masse koppelt, wobei der Schalter ein Steuereingang aufweist, der mit der Ausgabe der zweiten Schwellwert-Schaltung gekoppelt ist.

4. Ein System nach Anspruch 3 und ferner mit einem Induktor (53), der zwischen dem ersten Schalter (49) und dem Bus gekoppelt ist, wobei der Induktor einen Mittelabgriff aufweist, wobei der zweite Schalter (51) den Mittelabgriff mit Masse koppelt.

5. Ein System nach Anspruch 4, ferner aufweisend eine Diode (55) zwischen dem Induktor (53) und Masse, wobei die Diode (55) mit ihrer Kathode mit dem Induktor (53) gekoppelt ist.

6. Ein System nach Anspruch 3, ferner aufweisend einen ersten Widerstand (53a), der zwischen dem ersten Schalter (49) und dem Bus (15) gekoppelt ist, und einem zweiten Widerstand (53b), der zwischen dem zweiten Schalter (51) und dem Bus (15) gekoppelt ist.

7. Ein System nach Anspruch 3, wobei die ersten (21) und zweiten (23) Schwellwert-Schaltungen jeweils aufweisen:
a. einen Komparator (25, 35) mit nicht-invertierenden und invertierenden Eingängen, wobei einer der Eingänge mit dem Bus (15) gekoppelt ist,
b. einen Spannungsteiler mit dritten (27, 37) und vierten (29, 39) Widerständen in Serie, mit einem dazwischen angeordneten Anschluss (31, 41), wobei der Anschluss mit dem anderen Eingang des Komparators gekoppelt ist, wobei der dritte Widerstand (27, 37) des Spannungsteilers mit dem Bus (15) gekoppelt ist und der vierte Widerstand (29, 39) des Spannungsteilers mit einer Referenzspannung gekoppelt ist; und
c. einen mittelnden Kondensator (33, 43), der den anderen Komparatoreingang mit Masse koppelt.

8. Ein System nach Anspruch 7, wobei der vierte Widerstand (29) des Spannungsteilers und der ersten Schwellwert-Schaltung (21) mit Masse gekoppelt ist, und wobei der vierte (39) Widerstand der zweiten Schwellwert-Schaltung (23) mit der zweiten Spannung (VBIAS) gekoppelt ist.

9. Ein System nach Anspruch 8, wobei der erste (49) und zweite (51) Schalter FET-Schalter aufweisen.

10. Ein System nach Anspruch 1, wobei die erste Schwellschaltung aufweist:
a. einen Komparator (25) mit nicht-invertierenden und invertierenden Eingängen, wobei einer der Eingänge mit dem Bus (15) gekoppelt ist;
b. einen Spannungsteiler mit dritten (27) und vierten (29) Widerständen in Serie mit einem dazwischen angeordneten Anschluss (31), wobei der Anschluss mit dem anderen Eingang des Komparators gekoppelt ist, wobei der dritte (27) Widerstand mit dem Bus (15) gekoppelt ist, und wobei der vierte Widerstand (29) mit einer Referenzspannung gekoppelt ist; und
c. einen mittelnden Kondensator, welcher den anderen Komparatoreingang mit Masse koppelt (33).

11. Ein System nach Anspruch 10, wobei der vierte Widerstand (29) des Spannungsteilers der ersten Schwellwert-Schaltung (21) mit Masse gekoppelt ist.

12. Ein System nach Anspruch 10, wobei der erste Schalter (49) einen FET-Schalter aufweist, der ein Gate hat, welches seinen Steuereingang bildet.

13. Ein System nach Anspruch 12 und ferner mit einem FET-Treiber (45), welcher den Ausgang der ersten Schwellwert-Schaltung mit dem Gate koppelt.

14. Ein Computersystem, aufweisend:
eine Last (14);
eine Spannungsversorgung (11), welche eine erste Spannung mit einem normalen nominellen Wert mit der Last koppelt; und
einen DC-Versorgungsbus (15), welcher sich zwischen der Spannungsversorgung und der Last erstreckt, wobei der Bus (15) die erste Spannung führt; und
eine Transienten-Unterdrückungsschaltung zum Unterdrücken von Transienten auf dem Bus, aufweisend eine erste Schwellwert-Schaltung (21), welche ein erstes Signal an einem Ausgang bereitstellt, wenn die erste Spannung von dem nominellen Wert um mehr als einen ersten vorgegebenen Wert abweicht;
eine Stromquelle (17) mit einem Kondensator (19), welcher eine zweite Spannung speichert, die einen größeren Wert hat als der nominelle Wert der ersten Spannung; und
einem ersten Schalter (49), der den Kondensator (19) mit dem Bus (15) koppelt, wobei der Schalter ein Steuereingang aufweist, der mit dem Ausgang der ersten Schwellwert-Schaltung (21) gekoppelt ist.

15. Ein Computersystem nach Anspruch 14, wobei die Spannungsversorgung außerdem einen zweiten Ausgang aufweist, der die zweite Spannung (VBIAS) bereitstellt, und wobei die Stromquelle (17) außerdem eine Stromquelle aufweist, die zum Empfangen der zweiten Spannung als Eingabe gekoppelt ist und eine Stromausgabe bereitstellt, wobei der Kondensator (19) mit der Stromausgabe der Stromquelle gekoppelt ist.

16. Ein Computersystem nach Anspruch 15, wobei der erste vorgegebene Wert ein Wert unterhalb des nominellen Wertes ist, wobei die Transienten-Unterdrückungsschaltung ferner aufweist:
a. eine zweite Schwellwert-Schaltung (23), welche eine Ausgabe bereitstellt, wenn die erste Spannung von ihrem nominellen Wert um mehr als einen zweiten vorgegebenen Wert abweicht, oberhalb des nominelle Wertes; und
b. einen zweiten Schalter (51), welcher den Bus (15) mit Masse koppelt, wobei der Schalter ein Steuereingang aufweist, der mit der Ausgabe der zweiten Schwellwert-Schaltung (23) gekoppelt ist.

17. Ein Computersystem nach Anspruch 16, wobei die ersten (21) und zweiten (23) Schwellwert-Schaltungen jeweils aufweisen:
a. einen Komparator (25) mit nicht-invertierenden und invertierenden Eingängen, wobei einer der Eingänge mit dem Bus gekoppelt ist;
b. einen Spannungsteiler mit ersten (27, 37) und zweiten (29, 39) Widerständen in Serie mit einem dazwischen angeordneten Anschluss (31, 41), wobei der Anschluss mit dem anderen Eingang des Komparators (25, 35) gekoppelt ist, wobei der erste Widerstand (27, 37) mit dem Bus (15) gekoppelt ist, und wobei der zweite Widerstand (29, 39) mit einer Referenzspannung gekoppelt ist; und
c. einen mittelnden Kondensator (33, 43), welcher den anderen Komparatoreingang mit Masse koppelt.

18. Ein Computersystem nach Anspruch 17, wobei der zweite Widerstand (29) des Spannungsteilers der ersten Schwellwert-Schaltung (21) mit Masse gekoppelt ist, und wobei der zweite Widerstand (39) der zweiten Schwellwert-Schaltung (23) mit der zweiten Spannung (VBIAS) gekoppelt ist.

19. Ein Computersystem nach Anspruch 17, wobei die ersten (49) und zweiten (51) Schalter FET-Schalter aufweisen, die jeweils ein Gate haben, welches ihren Steuereingang bildet.

20. Ein Computersystem nach Anspruch 19 und ferner enthaltend erste (45) und zweite (47) FET-Treiber, welche die Ausgänge der ersten (21) und zweiten (23) Schwellwert-Schaltungen mit den Gates der ersten (49) und zweiten (51) Schalter koppeln.

21. Ein Verfahren zum Unterdrücken von Transienten auf einem DC-Versorgungsbus (15), der sich zwischen einer Spannungsversorgung (11) und einer Last (14) erstreckt, wobei der Bus (15) eine erste Spannung führt, die einen nominellen Wert hat, aufweisend:
a. Aufladen eines Kondensators (19) auf eine zweite Spannung, die größer als die erste Spannung ist;
b. Erfassen, wann die erste Spannung von ihrem nominellen Wert um mehr als einen ersten vorgegebenen Wert abweicht; und
c. Koppeln des Kondensators (19) mit dem Bus (15) in Reaktion auf die Erfassung des ersten Schwellwertes.

22. Ein Verfahren nach Anspruch 21, wobei der vorgegebene Wert ein Wert unterhalb des nominellen Wertes ist, und ferner mit:
a. Erfassen, wann die erste Spannung größer als ein zweiter vorgegebener Wert oberhalb des nominellen Wertes der ersten Spannung ist; und
b. Koppeln des Busses (15) mit Masse in Reaktion auf die Erfassung des zweiten Schwellwertes.

23. Ein Verfahren nach Anspruch 22 und ferner mit der Begrenzung der Änderungsrate des Stromes, welcher zwischen dem Kondensator (19) und dem Bus(15) und zwischen dem Bus und Masse fließt.

24. Ein Verfahren nach Anspruch 23 und ferner mit dem Unterdrücken einer Spannung, die aus der Änderung des Stromflusses von dem Kondensator (19) zu dem Bus (15) resultiert.

25. Ein Verfahren nach Anspruch 24, wobei die Schritte des Erfassens, wann die erste Spannung von ihrem nominellen Wert mehr als um einen ersten und einen zweiten Wert abweicht, jeweils aufweisen:
a. Ableiten eines Referenzspannungswertes von der nominellen Spannung auf dem Bus (15) und Speichern der Spannung;
b. Vergleichen der Spannung auf dem Bus (15) mit dem Referenzwert;
c. Erzeugen einer Ausgabe, um die Kopplung des Busses (15) mit dem Kondensator (19) bzw. der Masse zu bewirken, wenn die Spannung auf dem Bus mehr als um den Referenzwert abweicht.

26. Ein Verfahren nach Anspruch 25, wobei die Referenzspannung ein kleinerer Wert als der nominelle Wert der ersten Spannung ist, und eine Ausgabe, welche die Kopplung des Busses (15) mit dem Kondensator (19) bewirkt, erzeugt wird, wenn die Spannung auf dem Bus unterhalb des genannten Referenzspannungswertes abfällt.

27. Ein Verfahren nach Anspruch 26, wobei die Referenzspannung ein größerer Wert als der nominelle Wert der ersten Spannung ist und eine Ausgabe, welche die Kopplung des Busses (15) mit Masse bewirkt, erzeugt wird, wenn die Spannung auf dem Bus unterhalb des Referenzspannungswerts abfällt.

## Revendications

1. Système, comprenant un bus, transportant une première tension ayant une valeur nominale et un circuit pour supprimer les transitoires sur ledit bus, comprenant :
un premier circuit à seuil (21), pour fournir un premier signal à une sortie, lorsque ladite première tension s'écarte de ladite valeur nominale de plus d'une première quantité prédéterminée ; **caractérisé en ce qu'**il comprend en outre
une source de courant (17), comprenant un condensateur (19) stockant une deuxième tension (VBIAS) ayant une valeur supérieure à ladite tension nominale de ladite première tension ; et
un premier commutateur (49), couplant ledit condensateur (19) audit bus (15), ledit commutateur ayant une entrée de commande couplée à la sortie dudit premier circuit à seuil.

2. Système selon la revendication 1, dans lequel ladite source de courant (17) comprend en outre une source de courant couplée pour recevoir ladite deuxième tension (VBIAS) en tant qu'entrée, et fournissant une sortie en courant, ledit condensateur (19) étant couplé à ladite sortie en courant.

3. Système selon la revendication 2, dans lequel ladite première quantité prédéterminée est une quantité inférieure à ladite valeur nominale, et comprenant en outre :
a. un deuxième circuit à seuil (23), fournissant un signal de sortie lorsque ladite première tension s'écarte de sa valeur nominale de plus d'une deuxième quantité prédéterminée au-dessus de ladite valeur nominale ; et
b. un deuxième commutateur (51), couplant ledit bus à la masse, ledit commutateur ayant une entrée de commande couplée à la sortie dudit deuxième circuit à seuil.

4. Système selon la revendication 3, et comprenant en outre une inductance (53), couplée entre ledit premier commutateur (49) et ledit bus, ladite inductance ayant un point de prélèvement central, ledit deuxième commutateur (51) couplant ledit point de prélèvement central à la masse.

5. Système selon la revendication 4, et comprenant en outre une diode (55), entre ladite inductance (53) et la masse, ladite diode (55) ayant sa cathode couplée à ladite inductance (53).

6. Système selon la revendication 3, et comprenant en outre une première résistance (53a), couplée entre ledit premier commutateur (49) et ledit bus (15), et une deuxième résistance (53b), couplée entre ledit deuxième commutateur (51) et ledit bus (15).

7. Système selon la revendication 3, dans lequel lesdits premier (21) et deuxième (23) circuits à seuil comprennent chacun :
a. un comparateur (25, 35), muni d'entrées non-inversives et inversives, ayant une desdites entrées couplée audit bus (15) ;
b. un diviseur de tension, comprenant des troisième (27, 37) et quatrième (29, 39) résistances branchées en série, ayant entre elles une jonction (31, 41), ladite jonction étant couplée à l'autre entrée dudit comparateur (25, 35), la troisième résistance (27, 37) dudit diviseur de tension étant couplée audit bus (15) et ladite quatrième résistance (29, 39) dudit diviseur de tension étant couplée à un potentiel de référence ; et
c. un condensateur de formation de moyenne (33, 43), couplant ledit autre comparateur à la masse.

8. Système selon la revendication 7, dans lequel ladite quatrième résistance (29) du diviseur de tension dudit premier circuit à seuil (21) est couplée à la masse, et ladite quatrième résistance (39) dudit deuxième circuit à seuil (23) est couplée à ladite deuxième tension (VBIAS).

9. Système selon la revendication 8, dans lequel lesdits premier (49) et deuxième (51) commutateurs comprennent des commutateurs à transistors à effet de champ (FET).

10. Système selon la revendication 1, dans lequel ledit premier circuit à seuil comprend :
a. un comparateur (25), muni d'entrées non-inversives et inversives, ayant une desdites entrées couplée audit bus (15),
b. un diviseur de tension, comprenant des troisième (27) et quatrième (29) résistances branchées en série, ayant entre elles une jonction (31), ladite jonction étant couplée à l'autre entrée dudit comparateur, ladite troisième résistance (27) étant couplée audit bus (15) et la quatrième résistance (29) étant couplée à un potentiel de référence ; et
c. un condensateur de formation de moyenne (33), couplant ledit autre comparateur à la masse.

11. Système selon la revendication 10, dans lequel ladite quatrième résistance (29) du diviseur de tension dudit premier circuit à seuil (21) est couplée à la masse.

12. Système selon la revendication 10, dans lequel ledit premier commutateur (49) comprend un commutateur FET, ayant une grille formant son entrée de commande.

13. Système selon la revendication 12, et comprenant en outre un premier excitateur de FET, couplant la sortie dudit premier circuit à seuil à ladite grille.

14. Système informatique, comprenant :
une charge (14) ;
une alimentation en énergie (11), fournissant une première tension ayant une valeur nominale normale, couplée à ladite charge ; et
un bus de puissance en courant continu cc (15), s'étendant entre ladite alimentation en énergie et ladite charge, ledit bus (15) transportant ladite première tension ; et
un circuit de suppression des transitoires, pour supprimer les transitoires sur ledit bus, comprenant un premier circuit à seuil (21), pour fournir un premier signal à une sotie lorsque ladite première tension s'écarte de ladite valeur nominale de plus d'une première quantité prédéterminée ;
une source de courant (17), comprenant un condensateur (19) stockant une deuxième tension ayant une valeur supérieure à ladite tension nominale de ladite première tension ; et
un premier commutateur (49), couplant ledit condensateur (19) audit bus (15), ledit commutateur ayant une entrée de commande couplée à la sortie dudit premier circuit à seuil (21).

15. Système informatique selon la revendication 14, dans lequel l'alimentation en énergie comprend également une deuxième sortie, fournissant ladite deuxième tension (VBIAS), et ladite source de courant (17) comprend en outre une source de courant couplée pour recevoir ladite deuxième tension en tant qu'entrée et fournir une sortie en courant, ledit condensateur (19) étant couplé à ladite sortie en courant de ladite source de courant.

16. Système informatique selon la revendication 15, dans lequel ladite première quantité prédéterminée est une quantité inférieure à ladite valeur nominale, dans lequel ledit circuit de suppression des transitoires comprend en outre :
a. un deuxième circuit à seuil (23), fournissant un signal de sortie lorsque ladite première tension s'écarte de sa valeur nominale de plus d'une deuxième quantité prédéterminée au-dessus de ladite valeur nominale ; et
b. un deuxième commutateur (51), couplant ledit bus (15) à la masse, ledit commutateur ayant une entrée de commande couplée à la sortie dudit deuxième circuit à seuil (23).

17. Système informatique selon la revendication 16, dans lequel lesdits premier (21) et deuxième (23) circuits à seuil comprennent chacun :
a. un comparateur (25, 35), muni d'entrées non-inversives et inversives, ayant une desdites entrées couplée audit bus ;
b. un diviseur de tension, comprenant des première (27, 37) et deuxième (29, 39) résistances branchées en série, ayant entre elles une jonction (31, 41), ladite jonction étant couplée à l'autre entrée dudit comparateur, ladite première résistance (27, 37) étant couplée audit bus (15) et ladite deuxième résistance (29, 39) étant couplée à un potentiel de référence ; et
c. un condensateur de formation de moyenne (33, 43), couplant ledit autre comparateur à la masse.

18. Système informatique selon la revendication 17, dans lequel ladite deuxième résistance (29) du diviseur de tension dudit premier circuit à seuil (21) est couplée à la masse, et ladite deuxième résistance (39) dudit deuxième circuit à seuil (23) est couplée à ladite deuxième tension (VBIAS).

19. Système informatique selon la revendication 17, dans lequel lesdits premier (49) et deuxième (51) commutateurs comprennent des commutateurs FET, ayant chacun une grille formant son entrée de commande.

20. Système informatique selon la revendication 19, et comprenant en outre des premier (45) et deuxième (47) excitateurs de FET, couplant les sorties desdits premier (21) et deuxième (23) circuits à seuil auxdites grilles des premier (49) et deuxième (51) commutateurs.

21. Procédé de suppression des tensions transitoires dans un bus d'alimentation en courant continu cc (15) s'étendant entre une alimentation en énergie (11) et une charge (14), ledit bus (15) transportant une première tension ayant une valeur nominale, comprenant :
a. le chargement d'un condensateur (19) à une deuxième tension, supérieure à ladite première tension ;
b. la détection du moment auquel une première tension s'écarte de sa valeur nominale de plus d'une première quantité prédéterminée ; et
c. le couplage dudit condensateur (19) audit bus (15), en réponse à la détection dudit premier seuil.

22. Procédé selon la revendication 21, dans lequel ladite quantité prédéterminée est une quantité inférieure à ladite valeur nominale, et comprenant en outre :
a. la détection du moment auquel ladite première tension est supérieure à une deuxième quantité prédéterminée, supérieure à ladite valeur nominale de ladite première tension ; et
b. le couplage dudit bus (15) à la masse, en réponse à la détection dudit deuxième seuil.

23. Procédé selon la revendication 22, et comprenant en outre la limitation du taux ou vitesse de changement du courant passant entre ledit condensateur (19) et ledit bus (15) et entre ledit bus et la masse.

24. Procédé selon la revendication 23, et comprenant en outre la suppression d'une tension résultant d'un changement du courant passant dudit condensateur (19) audit bus (15).

25. Procédé selon la revendication 24, dans lequel lesdites étapes de détection du moment, auquel ladite première tension s'écarte de sa valeur nominale de plus d'une première et une deuxième quantité, comprend chaque fois :
a. la dérivation d'une valeur de référence à partie de la tension nominale sur ledit bus (15), et le stockage de ladite tension ;
b. la comparaison de la tension, sur ledit bus (15), à ladite valeur de référence ;
c. la génération d'un signal de sortie, pour provoquer le couplage dudit bus (15) audit condensateur (19) et à la masse, respectivement, lorsque la tension sur ledit bus s'écarte au-delà de ladite tension de référence.

26. Procédé selon la revendication 25, dans lequel ladite tension de référence est d'une valeur inférieure à ladite valeur nominale de ladite première tension, et un signal de sortie, provoquant le couplage dudit bus (15) audit condensateur (19), est généré lorsque la tension sur ledit bus chute au-dessous de ladite valeur de tension de référence.

27. Procédé selon la revendication 26, dans lequel ladite tension de référence est d'une valeur supérieure à ladite valeur nominale de ladite première tension, et un signal de sortie, provoquant le couplage dudit bus (15) à la masse, est généré lorsque la tension sur ledit bus chute au-dessous de ladite valeur de tension de référence.
